# EUROPEAN PATENT APPLICATION

(11) **EP 4 389 492 A2**
(43) Date of publication of application: **26.06.2024**
(21) Application number: 23210686.4
(22) Date of filing: 17.11.2023
(51) Int. Cl.: B60K 35/21, B60K 35/23

(54) **VEHICLE DISPLAY CONTROL DEVICE, VEHICLE DISPLAY CONTROL METHOD, AND NON-TRANSITORY STORAGE MEDIUM**

(30) Priority: 20.12.2022 JP 2022203684
(71) Applicant: TOYOTA JIDOSHA KABUSHIKI KAISHA, Toyota-shi, Aichi-ken, 471-8571 (JP)
(72) Inventor: TSUJINO, Miki, Toyota-shi, 471-8571 (JP); MATSUMOTO, Kentaro, Toyota-shi, 471-8571 (JP)
(74) Representative: J A Kemp LLP

(57) **Abstract**

A vehicle display control device (30) includes one or more processors. The one or more processors are configured to: acquire information on any surrounding vehicle located around a vehicle (10); detect a state of a driver assistance function installed in the vehicle (10); and cause a display (24, 25, 26) installed in a vehicle cabin (13) of the vehicle (10) to display the surrounding vehicle in different display modes depending on whether the driver assistance function is in an activated state or in a deactivated state.

## Description

### BACKGROUND OF THE INVENTION

### 1. Field of the Invention

The present disclosure relates to vehicle display control devices, vehicle display control methods, and non-transitory storage media.

### 2. Description of Related Art

Japanese Unexamined Patent Application Publication No. 2022-041244 (JP 2022-041244 A) discloses an in-vehicle display device that displays, on a meter display and a head-up display, a preceding vehicle traveling ahead of a vehicle in the same lane as the vehicle. This in-vehicle display device restrains images of surrounding objects other than the preceding vehicle from being displayed on the head-up display.

### SUMMARY OF THE INVENTION

In the technique described in JP 2022-041244 A, however, images of surrounding objects located around the vehicle, including the preceding vehicle, are displayed on the meter display regardless of the activation state of a driver assistance function such as adaptive cruise control (ACC) and autonomous driving. It is therefore difficult to be aware of the activation state of the driver assistance function.

The present invention provides a vehicle display control device, a vehicle display control method, and a non-transitory storage media that make it easier for an occupant of a vehicle to be aware of the activation state of the driver assistance function.

A vehicle display control device according to a first aspect of the present invention includes one or more processors. The one or more processors are configured to: acquire information on any surrounding vehicle located around a vehicle; detect a state of a driver assistance function installed in the vehicle; and cause a display installed in a vehicle cabin of the vehicle to display the surrounding vehicle in different display modes depending on whether the driver assistance function is in an activated state or in a deactivated state.

In the vehicle display control device according to the first aspect of the present invention, the one or more processors cause the display installed in the vehicle cabin of the vehicle to display the surrounding vehicle in different display modes depending on whether the driver assistance function is in the activated state or in the deactivated state. Since the surrounding vehicle is displayed in different display modes on the display depending on whether the driver assistance function is in the activated state or in the deactivated state, an occupant of the vehicle can be easily aware of the activation state of the driver assistance function.

In the vehicle display control device according to the above aspect, the one or more processors may be configured to cause the display to display the surrounding vehicle more highlighted when the driver assistance function is in the activated state than when the driver assistance function is in the deactivated state.

In the vehicle display control device according to the above aspect, the surrounding vehicle is displayed more highlighted when the driver assistance function is in the activated state than when the driver assistance function is in the deactivated state. Manual driving can be an example of when the driver assistance function is in the deactivated state. In this case, the surrounding vehicle is not displayed highlighted during manual driving, which can reduce excessive display during manual driving. This can reduce distraction of the driver.

The vehicle display control device according to the above aspect, the one or more processors may be configured to cause the display to display the surrounding vehicle more highlighted when the driver assistance function is in the deactivated state than when the driver assistance function is in the activated state.

In the vehicle display control device according to the above aspect, the surrounding vehicle is displayed more highlighted when the driver assistance function is in the deactivated state than when the driver assistance function is in the activated state. Manual driving can be an example of when the driver assistance function is in the deactivated state. In this case, the surrounding vehicle is displayed highlighted during manual driving. This can alert the driver about the surrounding vehicle.

In the vehicle display control device according to the above aspect, the one or plurality processors may be configured to cause the display to display the surrounding vehicle two-dimensionally when the driver assistance function is in the deactivated state, and cause the display to display the surrounding vehicle three-dimensionally when the driver assistance function is in the activated state.

In the vehicle display control device according to the above aspect, the surrounding vehicle is displayed two-dimensionally when the driver assistance function is in the deactivated state, and is displayed three-dimensionally when the driver assistance function is in the activated state. Manual driving can be an example of when the driver assistance function is in the deactivated state. In this case, the surrounding vehicle is displayed two-dimensionally during manual driving, which can reduce excessive display during manual driving. This can reduce distraction of the driver.

In the vehicle display control device according to the above aspect, the one or plurality processors may be configured to cause the display to display the surrounding vehicle three-dimensionally when the driver assistance function is in the deactivated state, and cause the display to display the surrounding vehicle two-dimensionally when the driver assistance function is in the activated state.

In the vehicle display control device according to the above aspect, the surrounding vehicle is displayed two-dimensionally when the driver assistance function is in the deactivated state, and is displayed three-dimensionally when the driver assistance function is in the activated state. Manual driving can be an example of when the driver assistance function is in the deactivated state. In this case, the surrounding vehicle is displayed three-dimensionally during manual driving. This can alert the driver about the surrounding vehicle.

In the vehicle display control device according to the above aspect, the information on the surrounding vehicle may include vehicle type information, and the one or more processors may be configured to cause the display to display image data of the surrounding vehicle having a shape stored in advance, based on the vehicle type information.

In the vehicle display control device according to the above aspect, the image data of the surrounding vehicle having a shape stored in advance is displayed based on the vehicle type information. Since the image data showing the shape of the vehicle type of the surrounding vehicle that is actually located around the vehicle is displayed, the driver can be more specifically aware of the surrounding vehicle.

In the vehicle display control device according to the above aspect, the one or more processors may be configured to, when the surrounding vehicle whose behavior value indicating behavior is larger than a predetermined threshold is detected, cause the display to display the surrounding vehicle highlighted.

In the vehicle display control device according to the above aspect, the surrounding vehicle whose behavior value is larger than the predetermined threshold is displayed highlighted. This can alert the driver about the surrounding vehicle having a large behavior value.

In the vehicle display control device according to the above aspect, the one or more processors may be configured to cause the display to display either or both of a preceding vehicle and a following vehicle that are located in a same lane as the vehicle and an oncoming vehicle located in an oncoming lane in different display modes from each other.

In the vehicle display control device according to the above aspect, the vehicle located in the same lane as the vehicle and the oncoming vehicle are displayed in different display modes from each other. This allows the driver to easily distinguish between the vehicle located in the same lane as the vehicle and the oncoming vehicle.

In the vehicle display control device according to the above aspect, the one or more processors may be configured to cause the display to display either or both of a preceding vehicle and a following vehicle that are located in a same lane as the vehicle and not to display an oncoming vehicle located in an oncoming lane.

In the vehicle display control device according to the above aspect, the vehicle located in a same lane as the vehicle is displayed, and the oncoming vehicle is not displayed. It is therefore easy to be aware of the vehicle located in the same lane as the vehicle.

A vehicle display control method according to a second aspect of the present invention includes: acquiring information on any surrounding vehicle located around a vehicle; detecting a state of a driver assistance function installed in the vehicle; and causing a display installed in a vehicle cabin of the vehicle to display the surrounding vehicle in different display modes depending on whether the driver assistance function is in an activated state or in a deactivated state.

In the vehicle display control method according to the above aspect, the surrounding vehicle is displayed on the display installed in the vehicle cabin of the vehicle in different display modes depending on whether the driver assistance function is in the activated state or in the deactivated state. Since the surrounding vehicle is displayed in different display modes on the display depending on whether the driver assistance function is in the activated state or in the deactivated state, an occupant of the vehicle can be easily aware of the activation state of the driver assistance function.

A non-transitory storage medium according to a third aspect of the present invention stores instructions that are executable by one or more processors and that cause the one or more processors to perform functions. The functions include: acquiring information on any surrounding vehicle located around a vehicle; detecting a state of a driver assistance function installed in the vehicle; and causing a display installed in a vehicle cabin of the vehicle to display the surrounding vehicle in different display modes depending on whether the driver assistance function is in an activated state or in a deactivated state.

In the non-transitory storage medium according to the above aspect, the one or more processors function as a display control unit that causes the display mounted in the vehicle cabin of the vehicle to display the surrounding vehicle located around the vehicle in different display modes depending on whether the driver assistance function is in the activated state or in the deactivated state. Since the surrounding vehicle is displayed in different display modes on the display depending on whether the driver assistance function is in the activated state or in the deactivated state, an occupant of the vehicle can be easily aware of the activation state of the driver assistance function.

As described above, the vehicle display control device, the vehicle display control method, and the non-transitory storage media according to the present invention are advantageous in that they make it easier for an occupant of a vehicle to be aware of the activation state of the driver assistance function.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view of a front part of a vehicle cabin of a vehicle to which a vehicle display device according to a first embodiment is applied, as viewed from the rear side of the vehicle;
FIG. 2 is a block diagram showing hardware configurations of the vehicle according to the first embodiment;
FIG. 3 is a block diagram showing functional configurations of a display control electronic control unit (ECU) according to the first embodiment;
FIG. 4 shows an example of display in a display area of a first display unit when a driver assistance function is in a deactivated state in the first embodiment;
FIG. 5 shows an example of display in the display area of the first display unit when the driver assistance function is in an activated state in the first embodiment;
FIG. 6 is a flowchart showing an example of the flow of a display control process according to the first embodiment;
FIG. 7 shows an example of display in the display area of the first display unit when the driver assistance function is in the deactivated state in a second embodiment;
FIG. 8 shows an example of display in the display area of the first display unit when the driver assistance function is in the activated state in the second embodiment;
FIG. 9 is a flowchart showing an example of the flow of a display control process according to the second embodiment;
FIG. 10 shows an example of display in the display area of the first display unit when the driver assistance function is in the activated state in a first modification;
FIG. 11 shows an example of display in the display area of the first display unit when the driver assistance function is in the activated state in a second modification;
FIG. 12 shows an example of display in the display area of the first display unit when the driver assistance function is in the activated state in a third embodiment;
FIG. 13 is a flowchart showing an example of the flow of a display control process according to the third embodiment;
FIG. 14 shows an example of display in the display area of the first display unit when the driver assistance function is in the deactivated state in a third modification;
FIG. 15 shows an example of display in the display area of the first display unit when the driver assistance function is in the activated state in the third modification; and
FIG. 16 shows an example of display in a display area of a third display unit.

### DETAILED DESCRIPTION OF EMBODIMENTS

### First Embodiment

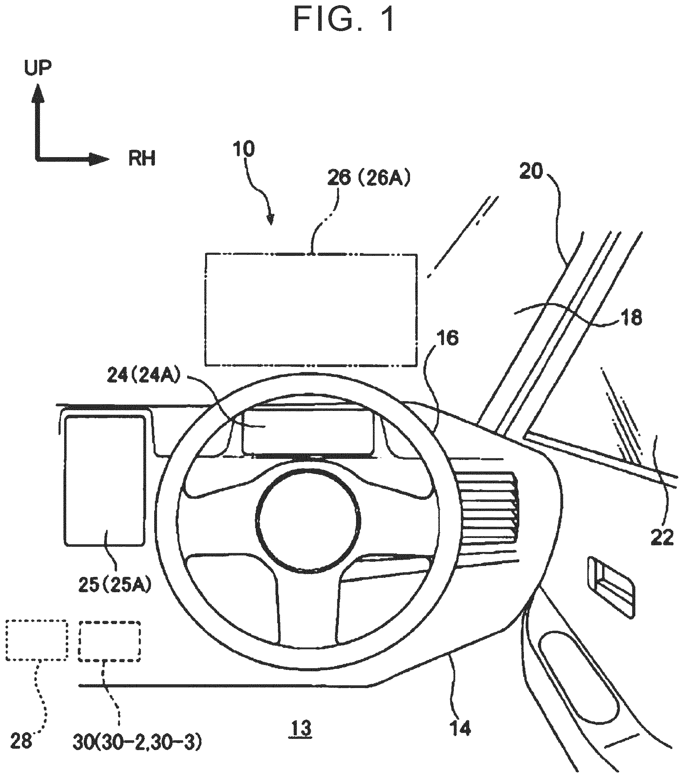

A vehicle 10 will be described with reference to the drawings. The vehicle 10 is a vehicle to which a display control electronic control unit (ECU) 30 as a vehicle display control device according to a first embodiment of the present invention, a driver assistance ECU 28, etc. are applied. The arrow UP shown in FIG. 1 indicates the upper side in the up-down direction of the vehicle 10, and the arrow RH shown in FIG. 1 indicates the right side in the lateral direction of the vehicle 10. The up-down direction and the left-right direction in the following description mean the upper and lower sides in the vertical direction of the vehicle and the left and right sides in the lateral direction of the vehicle.

As shown in FIG. 1, an instrument panel 14 is installed in the front part of a vehicle cabin 13 of the vehicle 10. The instrument panel 14 extends in the lateral direction of the vehicle 10, and a steering wheel 16 is installed on the right side of the instrument panel 14 in the lateral direction of the vehicle 10. That is, in the present embodiment, as an example, the vehicle is a right-hand drive vehicle with the steering wheel 16 on the right side, and a driver's seat is on the right side of the vehicle 10. A windshield glass 18 is installed at the front end of the instrument panel 14.

The windshield glass 18 extends upward in the vertical direction of the vehicle 10 from the front end of the instrument panel 14, and separates the outside and inside of the vehicle cabin 13 of the vehicle 10. The right end of the windshield glass 18 in the lateral direction of the vehicle 10 is fixed to a front pillar 20 on the right side of the vehicle 10. The front pillar 20 extends in the vertical direction of the vehicle 10, and the windshield glass 18 is fixed to the inner end of the front pillar 20 in the lateral direction of the vehicle 10. The front end of a front side glass 22 is fixed to the outer end of the front pillar 20 in the lateral direction of the vehicle 10. The left end of the windshield glass 18 in the lateral direction of the vehicle 10 is fixed to a front pillar on the left side of the vehicle 10, not shown.

A first display unit 24 as a display unit is mounted on the instrument panel 14. The first display unit 24 includes a display area 24A for displaying an image. The first display unit 24 is a meter display mounted on the right side of the instrument panel 14 in the lateral direction of the vehicle 10, and is located in front of the driver's seat in the longitudinal direction of the vehicle 10. The first display unit 24 is connected to various meter devices mounted on the vehicle 10, and is mounted at a position that is located in the field of vision of a driver when he or she looks ahead of the vehicle 10.

A second display unit 25 as a display unit is mounted on the instrument panel 14. The second display unit 25 includes a display area 25A for displaying an image. The second display unit 25 is a center display disposed in the middle portion of the instrument panel 14 in the lateral direction of the vehicle 10.

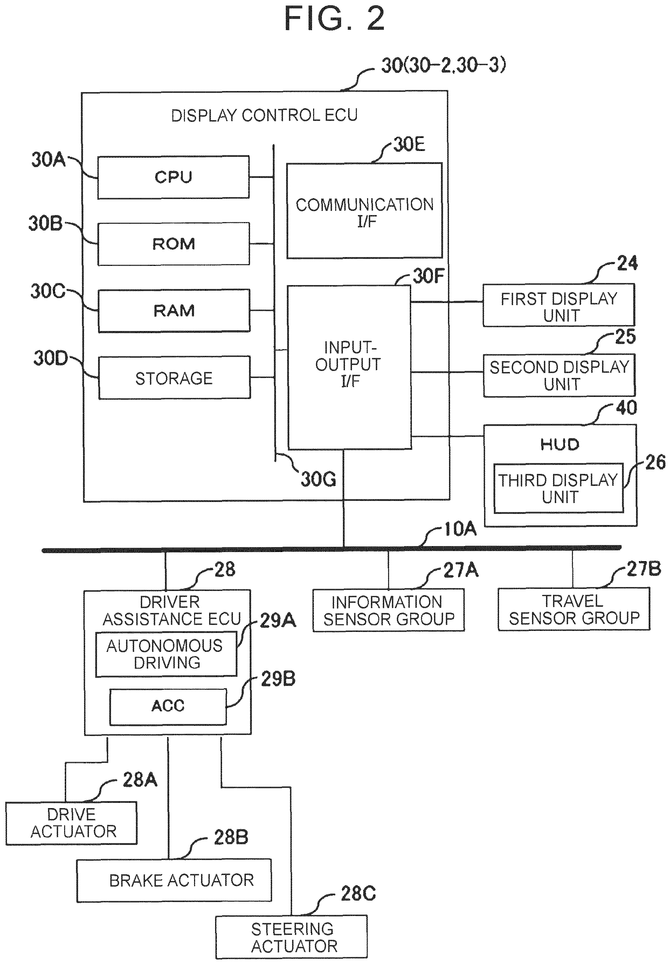

The windshield glass 18 is provided with a third display unit 26 as a display unit. The third display unit 26 has a display area 26A for displaying an image. The third display unit 26 is set to be located above the first display unit 24 in the vertical direction of the vehicle 10, and the display area 26A is a projection plane of a head-up display device 40 (see FIG. 2). Specifically, the head-up display device 40 is installed on a front part of the instrument panel 14 in the longitudinal direction of the vehicle 10. The head-up display device 40 is configured to project an image onto the display area 26A of the third display unit 26 on the windshield glass 18. That is, the third display unit 26 is part of the windshield glass 18 that is a projection plane of the head-up display device 40.

### Hardware Configurations of Vehicle 10

FIG. 2 is a block diagram showing hardware configurations of the vehicle 10.

As shown in FIG. 2, the vehicle 10 includes a communication bus 10A in the vehicle cabin 13. An information sensor group 27A, a travel sensor group 27B, a driver assistance ECU 28, and a display control ECU 30 are connected to the communication bus 10A. In addition to the driver assistance ECU 28 and the display control ECU 30, various ECUs may be connected to the communication bus 10A.

Although not shown in the figure, the information sensor group 27A includes a camera, a radar or Light Detection and Ranging or Laser Imaging Detection and Ranging (LIDAR), a Global Positioning System (GPS) device, an in-vehicle communication device, a navigation device, etc. The camera captures an image of the surroundings of the vehicle 10. The camera of the present embodiment includes at least a front camera that captures an image of the area ahead of the vehicle 10 and a back camera that captures an image of the area behind the vehicle 10. The number of cameras is not limited to this, and the camera of the present embodiment may further include, for example, a right side camera that captures an image of the area to the right of the vehicle 10 and a left side camera that captures an image of the area to the left of the vehicle 10.

The radar detects the distances and directions to objects around the vehicle 10 using radio waves. The LIDAR detects the distances and directions to objects around the vehicle 10 using laser light. In the present embodiment, the radar and the LIDAR include a signal processing unit (not shown) having a function to process the detection results of surrounding objects. The signal processing unit excludes noise, roadside objects such as guard rails, etc. from objects to be monitored, based on changes in relative positions and relative velocities with respect to individual objects included in a plurality of most recent detection results, and follows and monitors specific objects such as surrounding vehicles located around the vehicle 10 as surrounding objects.

The GPS device receives GPS signals from a plurality of GPS satellites and detects the current location of the vehicle 10. The in-vehicle communication device is a communication device that performs either or both of vehicle-to-vehicle communication with another vehicle and road-to-vehicle communication with a roadside device. The navigation device includes a map information storage unit that stores map information. The navigation device performs a process of displaying the location of the vehicle 10 on a map and providing a route to a destination, based on the location information obtained from the GPS device and the map information stored in the map information storage unit.

Although not shown in the figure, the travel sensor group 27B includes a steering angle sensor, a vehicle speed sensor, an acceleration sensor, a yaw rate sensor, an accelerator pedal sensor, a brake pedal sensor, etc. as a plurality of sensors for acquiring the travel state of the vehicle 10. The steering angle sensor is a device that detects the steering angle of the vehicle 10. For example, the steering angle sensor is mounted on the steering wheel 16 and detects the steering angle of the steering wheel 16. The vehicle speed sensor is a device that detects the travel speed of the vehicle 10. For example, the vehicle speed sensor is mounted on a wheel of the vehicle 10 or a drive shaft that rotates with the wheel, and detects the rotational speed of the wheel.

The acceleration sensor is a device that detects acceleration applied to the vehicle 10. For example, the acceleration sensor may be a three-axis acceleration sensor that detects accelerations applied to the vehicle 10 in the X-axis direction, Y-axis direction, and Z-axis direction, where the X-axis direction is the longitudinal direction of the vehicle 10, the Y-axis direction is the lateral direction of the vehicle 10, and the Z-axis direction is the height direction of the vehicle 10. The yaw rate sensor is a device that detects the yaw rate (rotational angular velocity) about the vertical axis of the center of gravity of the vehicle 10. For example, the yaw rate sensor may be a gyro sensor.

The accelerator pedal sensor is a device that is mounted on a shaft portion of an accelerator pedal of the vehicle 10 and detects the amount of depression of the accelerator pedal. The accelerator pedal sensor outputs an accelerator operation signal according to the detected amount of depression of the accelerator pedal. The brake pedal sensor is a device that is mounted on a shaft portion of a brake pedal of the vehicle 10 and detects the amount of depression of the brake pedal. The brake pedal sensor outputs a brake operation signal according to the detected amount of depression of the brake pedal.

Information etc. detected by the information sensor group 27A and the travel sensor group 27B is output to various ECUs such as the driver assistance ECU 28 and the display control ECU 30 via the communication bus 10A.

### Configuration of Driver Assistance ECU 28

Although not shown in the figure, the driver assistance ECU 28 includes: a central processing unit (CPU: processor); a memory such as a read-only memory (ROM) and a random access memory (RAM); a nonvolatile storage such as a hard disk drive (HDD) and a solid state drive (SSD); a communication interface (communication I/F); and an input-output interface (input-output I/F). These configurations are connected to each other via a bus so that they can communicate with each other.

The driver assistance ECU 28 implements various functions for assisting with driving of the vehicle 10, including at least drive control and braking control of the vehicle 10, by the CPU executing one or more pieces of software stored in the storage. In the present embodiment, as an example, the storage stores autonomous driving software (hereinafter simply referred to as autonomous driving) 29A that implements an autonomous driving function, and ACC software (hereinafter simply referred to as ACC) 29B that implements an ACC function. The autonomous driving 29A is an application that implements a function to cause the vehicle 10 to travel autonomously, and the ACC 29B is an application that implements a function to cause the vehicle 10 to follow a preceding vehicle while maintaining a constant following distance. The autonomous driving 29A and the ACC 29B will be described later in detail.

The storage may store automated parking software that implements an automated parking function, advanced driver assistance system (ADAS) software that implements an advanced driver assistance function, etc. The ADAS software includes an application that implements a function to calculate a corrected trajectory from the vehicle location to a predetermined target trajectory in order to cause the vehicle 10 to follow the target trajectory. The ADAS software further includes an application that implements a collision avoidance assist (such as pre-crash safety (PCS)) function, and an application that implements a lane keeping assist (such as lane tracing assist (LTA) and lane keeping assist (LKA)) function to keep the vehicle within its lane. The ADAS software further includes an application that implements a collision damage mitigation braking (such as autonomous emergency braking (AEB)) function to automatically brake the vehicle in order to reduce damage from a collision, and an application that implements a lane departure warning (such as lane departure warning (LDW) and lane departure alert (LDA)) function to provide an alert when the vehicle starts to deviate from its lane.

Various actuators that are used to control the vehicle 10, such as a drive actuator 28A, a brake actuator 28B, and a steering actuator 28C, are connected to the driver assistance ECU 28.

The drive actuator 28A controls a driving force of the vehicle 10 by controlling the amount of air to be supplied to an engine (throttle valve opening degree) according to a control signal from the driver assistance ECU 28. When the vehicle 10 is a hybrid electric vehicle, a control signal from the driver assistance ECU 28 is input to a motor serving as a power source to control the driving force of the vehicle 10 in addition to the amount of air to be supplied to the engine. When the vehicle 10 is a battery electric vehicle, a control signal from the driver assistance ECU 28 is input to a motor serving as a power source to control the driving force of the vehicle 10. The motor serving as a power source in these cases constitutes the various actuators described above.

The brake actuator 28B controls a brake system according to a control signal from the driver assistance ECU 28 to control a braking force to be applied to the wheels of the vehicle 10. For example, the brake system may be a hydraulic brake system.

The steering actuator 28C controls driving of an assist motor that controls steering torque in an electric power steering system, according to a control signal from the driver assistance ECU 28. The steering actuator 28C thus controls steering torque of the vehicle 10.

When an autonomous driving mode is selected, the CPU of the driver assistance ECU 28 executes the autonomous driving 29A, so that the driver assistance ECU 28 performs an autonomous driving process of causing the vehicle 10 to travel autonomously without driving operations by an occupant of the vehicle 10. The autonomous driving process is a process of determining the conditions of the vehicle 10 and its surroundings based on information obtained from the information sensor group 27A and the travel sensor group 27B and controlling the drive actuator 28A, the brake actuator 28B, and the steering actuator 28C.

In the present embodiment, when the autonomous driving mode is selected, the CPU of the driver assistance ECU 28 executes the autonomous driving 29A, so that the driver assistance ECU 28 performs the autonomous driving process of causing the vehicle 10 to travel autonomously without driving operations by the occupant of the vehicle 10. The autonomous driving process is a process of determining the conditions of the vehicle 10 and its surroundings based on the information obtained from the information sensor group 27A and the travel sensor group 27B and controlling the drive actuator 28A, the brake actuator 28B, and the steering actuator 28C. The autonomous driving mode can be switched between an activated state and a deactivated state by operating a switch (not shown) located at such a position that an occupant sitting in the driver's seat can operate the switch. In the present embodiment, when the autonomous driving mode is activated, the CPU determines that the autonomous driving function is switched to the activated state, and outputs a signal indicating the activated state to the display control ECU 30 via the communication bus 10A. A related art can be used for the autonomous driving process.

In the present embodiment, when an ACC mode is selected, the CPU of the driver assistance ECU 28 executes the ACC 29B, so that the driver assistance ECU 28 performs an ACC process of causing the vehicle 10 to follow a preceding vehicle traveling ahead of the vehicle 10 while maintaining a constant following distance. The ACC process is a process of determining the distance between the vehicle 10 and the preceding vehicle based on the information obtained from the information sensor group 27A and the travel sensor group 27B and controlling the drive actuator 28A, the brake actuator 28B, and the steering actuator 28C. Like the autonomous driving mode, the ACC mode can be switched between an activated state and a deactivated state by operating a switch (not shown) located at such a position that the occupant sitting in the driver's seat can operate the switch. In the present embodiment, when the ACC mode is activated, the CPU determines that the ACC function is switched to the activated state, and outputs a signal indicating the activated state to the display control ECU 30 via the communication bus 10A. A related art can be used for the ACC process.

### Configuration of Display Control ECU 30

As shown in FIG. 2, the display control ECU 30 includes a CPU 30A, a ROM 30B, a RAM 30C, a storage 30D, a communication I/F 30E, and an input-output I/F 30F. These configurations are connected to each other via a bus 30G so that they can communicate with each other.

The CPU 30A is a central processing unit that executes various programs and controls each unit. That is, the CPU 30A reads the programs from the ROM 30B or the storage 30D and executes the programs using the RAM 30C as a work area. The CPU 30A controls the above configurations and executes various kinds of arithmetic processing in accordance with the programs recorded on the ROM 30B or the storage 30D.

The ROM 30B stores various programs and various data. The RAM 30C serves as a work area and temporarily stores programs or data. The storage 30D is a hard disk drive (HDD) or a solid state drive (SSD), and stores various programs including an operating system and various kinds of data. In the present embodiment, the ROM 30B or the storage 30D stores a vehicle display control program for performing a vehicle display control process, various kinds of data, etc.

The communication I/F 30E is an interface for the display control ECU 30 to communicate with a server and other devices, not shown. For example, a standard such as Ethernet (registered trademark), long-term evolution (LTE), fiber distributed data interface (FDDI), or Wi-Fi (registered trademark) is used for the communication I/F 30E.

The first display unit 24, the second display unit 25, the head-up display device (HUD) 40, and the communication bus 10A are connected to the input-output I/F 30F. In the present embodiment, an image is projected onto the third display unit 26 by the head-up display device 40.

### Functional Configurations of Display Control ECU 30

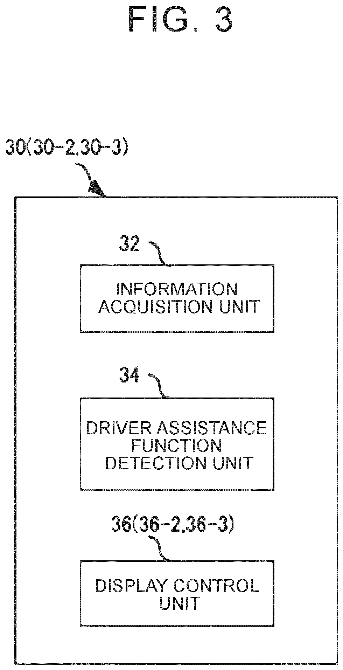

The display control ECU 30 implements various functions using the above hardware resources. Functional configurations implemented by the display control ECU 30 will be described with reference to FIG. 3.

As shown in FIG. 3, the display control ECU 30 includes, as the functional configurations, an information acquisition unit 32, a driver assistance function detection unit 34, and a display control unit 36. Each functional configuration is implemented by the CPU 30A reading and executing the vehicle display control program stored in the ROM 30B or the storage 30D.

The information acquisition unit 32 acquires information on any surrounding vehicle located around the vehicle 10. Specifically, the information acquisition unit 32 acquires information on any surrounding vehicle detected by the information sensor group 27A. For example, the information acquisition unit 32 acquires location information of any surrounding vehicle located around the vehicle 10, based on the relative position and relative velocity of the surrounding vehicle indicated by information acquired by the radar or the LIDAR.

As an example, the information acquisition unit 32 acquires captured image data of the surroundings of the vehicle 10 captured by the camera, and acquires vehicle type information of any surrounding vehicle based on the acquired captured image data. The vehicle type information includes, for example, vehicle size information such as standard vehicle, Kei car, and large vehicle, body style information such as sedan, sports car, minivan, and sport utility vehicle (SUV), and vehicle model information. Specifically, image data of vehicles represented by the above information is stored in advance in, for example, the storage 30D. The information acquisition unit 32 checks an image of any surrounding vehicle that is present in an image represented by the acquired captured image data against images of the vehicles represented by the stored image data, and thus acquires vehicle information of the surrounding vehicle.

The driver assistance function detection unit 34 detects the state of the driver assistance function installed in the vehicle 10. Specifically, when the autonomous driving mode is activated, the driver assistance function detection unit 34 detects a signal output from the driver assistance ECU 28 via the communication bus 10A and indicating that the autonomous driving function is in the activated state. Similarly, the driver assistance function detection unit 34 detects a signal output from the driver assistance ECU 28 via the communication bus 10A and indicating that the ACC function is in the activated state.

The display control unit 36 causes the first display unit 24 to display an image of the surrounding vehicle in different display modes depending on whether the driver assistance function is in the activated state or in the deactivated state. Specifically, when the driver assistance function detection unit 34 detects a signal indicating that either or both of the autonomous driving mode and the ACC function are activated, the display control unit 36 changes the display mode of the surrounding vehicle and causes the first display unit 24 to display an image of the surrounding vehicle in the changed display mode.

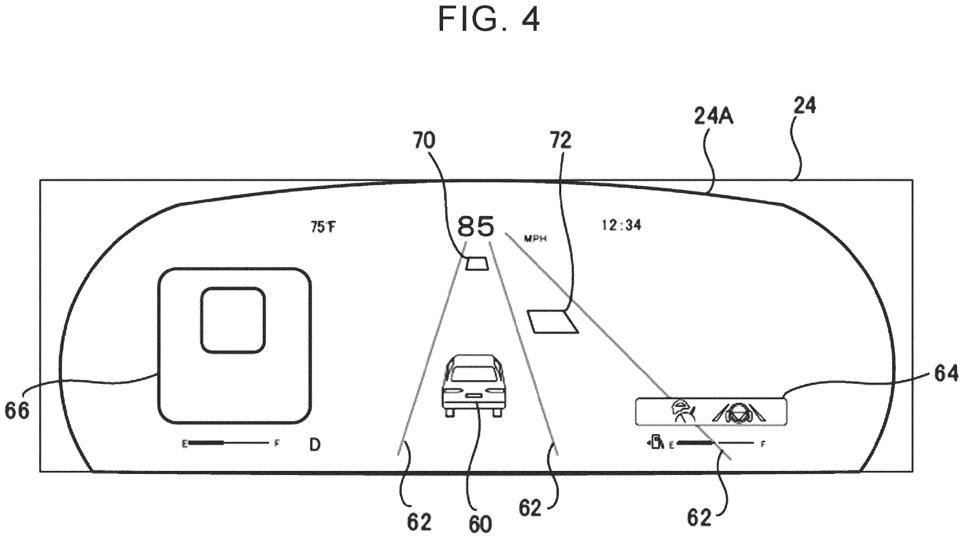

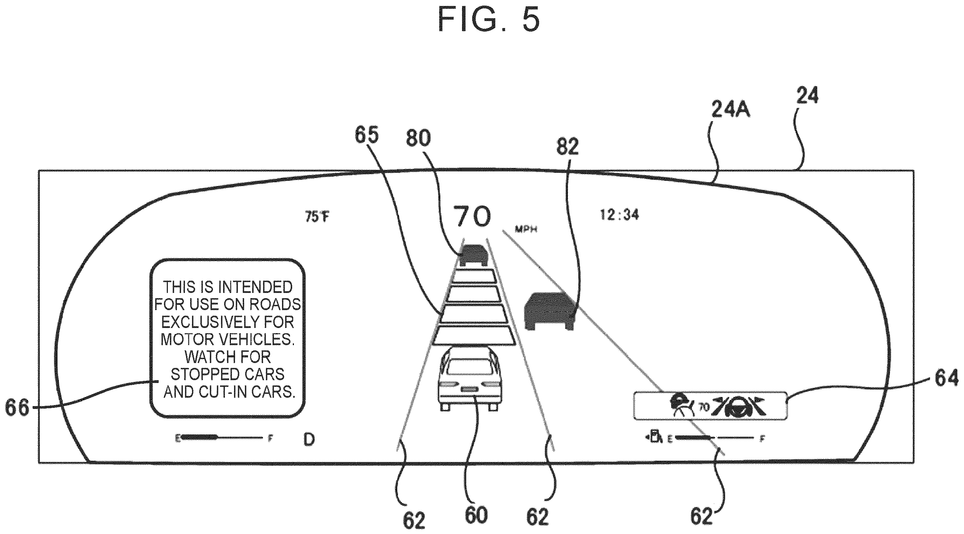

FIG. 4 shows an example of display in the display area 24A of the first display unit 24 when the driver assistance function is in the deactivated state. FIG. 5 shows an example of display in the display area 24A of the first display unit 24 when the driver assistance function is in the activated state.

As shown in FIG. 4, the display control unit 36 causes the first display unit 24 to display a vehicle image 60 substantially in the middle in the lateral direction of the display area 24A and below the middle in the vertical direction of the display area 24A. The vehicle image 60 is a three-dimensional image of the vehicle 10. The display control unit 36 also causes the first display unit 24 to display lane line images 62 on both sides of the vehicle image 60. The lane line images 62 are images of lane lines. In the present embodiment, as an example, the vehicle 10 is traveling on a two-lane road.

The display control unit 36 also causes the first display unit 24 to display a state image 64 in the lower right part of the display area 24A. The state image 64 is an image showing the state of the driver assistance function. The state image 64 includes an image showing the state of the ACC function, an image showing whether it is necessary to hold a steering wheel, an image showing the state of the autonomous driving mode, and an image showing the state of the LTA function. The display control unit 36 causes the first display unit 24 to display the state image 64 in such a manner that an image showing an activated function (see FIG. 5) is more highlighted than an image showing a deactivated function (see FIG. 4). One example of the highlighting method is to highlight the color as shown in FIG. 5. However, other highlighting methods can be used. The display control unit 36 also causes the first display unit 24 to display, for example, a driver image 66 substantially in the middle in the vertical direction of the left part of the display area 24A. The driver image 66 is an image showing driver information etc.

In the present embodiment, when the driver assistance function detection unit 34 detects that the autonomous driving mode and the ACC function are in the deactivated state, the display control unit 36 causes the first display unit 24 to display a surrounding vehicle as a two-dimensional image. Specifically, as shown in FIG. 4, when there is a preceding vehicle traveling ahead of the vehicle 10 in the same lane as the vehicle 10, a preceding vehicle image 70 showing the preceding vehicle is displayed as a two-dimensional image. In the present embodiment, as an example, the preceding vehicle image 70 is represented by a rectangle. For example, when there is a vehicle behind the vehicle 10 as a surrounding vehicle, the display control unit 36 can similarly cause the first display unit 24 to display a following vehicle image behind the vehicle image 60 as a two-dimensional image represented by a rectangle.

When there is an oncoming vehicle traveling in an oncoming lane, the display control unit 36 causes the first display unit 24 to display an oncoming vehicle image 72 showing the oncoming vehicle as a two-dimensional image represented by a rectangle. In the present embodiment, each of the preceding vehicle image 70 and the oncoming vehicle image 72 is displayed as a two-dimensional image represented by a rectangle. However, the present invention is not limited to this. For example, each of the preceding vehicle image 70 and the oncoming vehicle image 72 may be displayed as a plan view of the vehicle as viewed from above. In this case, two-dimensional images based on the vehicle information of the surrounding vehicles acquired by the information acquisition unit 32 are displayed. Specifically, the display control unit 36 selects two-dimensional images of the relevant surrounding vehicles from, for example, two-dimensional image data classified by vehicle size, body style, vehicle model, etc., and stored in advance in the storage 30D, and causes the first display unit 24 to display the selected two-dimensional images.

In the present embodiment, when the driver assistance function detection unit 34 detects that either or both of the autonomous driving mode and the ACC function are activated, the display control unit 36 causes the first display unit 24 to display the surrounding vehicles as three-dimensional images. Specifically, as shown in FIG. 5, when there is a preceding vehicle traveling ahead of the vehicle 10 in the same lane as the vehicle 10, a preceding vehicle image 80 showing the preceding vehicle is displayed as a three-dimensional image. In the present embodiment, as an example, the preceding vehicle image 80 is represented by a three-dimensional shape showing the contour of the preceding vehicle. For example, when there is a vehicle behind the vehicle 10 as a surrounding vehicle, the display control unit 36 can similarly cause the first display unit 24 to display a following vehicle image behind the vehicle image 60 as a three-dimensional image representing the contour of the following vehicle.

When there is an oncoming vehicle traveling in an oncoming lane, the display control unit 36 causes the first display unit 24 to display an oncoming vehicle image 82 showing the oncoming vehicle as a two-dimensional image representing the outline of the oncoming vehicle. In the present embodiment, as an example, the display control unit 36 causes the first display unit 24 to display the preceding vehicle image 80 and the oncoming vehicle image 82 as three-dimensional images based on vehicle information of the surrounding vehicles acquired by the information acquisition unit 32. Specifically, the display control unit 36 selects three-dimensional images of the relevant surrounding vehicles from, for example, three-dimensional image data classified by vehicle size, body style, vehicle model, etc., and stored in advance in the storage 30D, and causes the first display unit 24 to display the selected three-dimensional images.

When the driver assistance function detection unit 34 detects that either or both of the autonomous driving mode and the ACC function are activated, the display control unit 36 causes the first display unit 24 to display a following distance image 65 showing a following distance between the vehicle image 60 and the preceding vehicle image 80 as shown in FIG. 5. As an example, the following distance image 65 is composed of a plurality of rectangular blocks having such a width that the blocks conform to the lane line images 62 on both sides and arranged in the direction of travel of the vehicle 10. The following distance is shown by the number of blocks.

In the present embodiment, the preceding vehicle image 80 and the oncoming vehicle image 82 are displayed as three-dimensional images each representing the outline of the vehicle. However, the present invention is not limited to this. For example, the preceding vehicle image 80 and the oncoming vehicle image 82 may be displayed as simple three-dimensional images such as rectangular cuboids.

### Functions

Next, functions and effects of the first embodiment will be described.

### Display Control Process

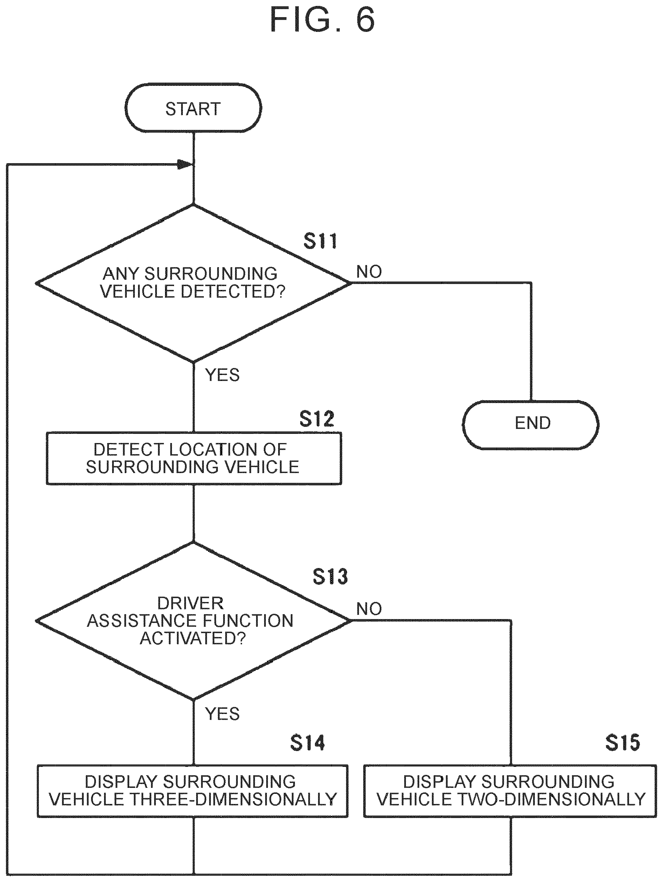

An example of a display control process of causing the first display unit 24 to display an image in the display area 24A will be described with reference to the flowchart of FIG. 6. This display control process is performed by the CPU 30A reading the display control program from the ROM 30B or the storage 30D, loading the display control program into the RAM 30C, and executing the display control program.

As shown in FIG. 6, the CPU 30A determines in step S11 whether any surrounding vehicle has been detected around the vehicle 10. Specifically, the CPU 30A uses the function of the information acquisition unit 32 to determine whether any surrounding vehicle is detected by the information sensor group 27A.

When no surrounding vehicle is detected, the determination result in step S11 is NO, and the CPU 30A ends the display control process. On the other hand, when a preceding vehicle is detected, the determination result in step S11 is YES, and the process proceeds to step S12.

The CPU 30A detects the location of the surrounding vehicle in step S12. Specifically, the CPU 30A uses the function of the information acquisition unit 32 to acquire information on the surrounding vehicle detected by the information sensor group 27A, and acquires location information of the surrounding vehicle based on the acquired information.

The CPU 30A determines in step S13 whether the driver assistance function is activated. Specifically, the CPU 30A uses the function of the driver assistance function detection unit 34 to detect whether the driver assistance function of the vehicle 10 is in the activated state or in the deactivated state. When the driver assistance function is in the activated state, the determination result in step S13 is YES, and the process proceeds to step S14.

In step S14, the CPU 30A displays the surrounding vehicle as a three-dimensional image. Specifically, the CPU 30A uses the function of the display control unit 36 to cause the first display unit 24 to display the preceding vehicle image 80 and the oncoming vehicle image 82, each represented by a three-dimensional shape representing the contour of the vehicle, as shown in FIG. 5 in such a manner as described above. The CPU 30A uses the function of the display control unit 36 to highlight an image(s) included in the state image 64 and representing an activated function(s) of the driver assistance function. The CPU 30A also uses the function of the display control unit 36 to cause the first display unit 24 to display a caution message, such as "This is intended for use on roads exclusively for motor vehicles. Watch for stopped cars and cut-in cars." to the driver in an area where the driver image 66 is displayed.

On the other hand, when the driver assistance function is not activated in step S13, that is, when the driver assistance function is deactivated, the determination result in step S13 is NO, and the process proceeds to step S15.

In step S15, the CPU 30A displays the surrounding vehicle as a two-dimensional image. Specifically, the CPU 30A uses the function of the display control unit 36 to cause the first display unit 24 to display the preceding vehicle image 70 and the oncoming vehicle image 72 as two-dimensional images as shown in FIG. 4 in such a manner as described above. As an example, each of the preceding vehicle image 70 and the oncoming vehicle image 72 is a two-dimensional image representing by a rectangle.

The process then returns to step S11 while the CPU 30A continues to perform step S14 or step S15, and the CPU 30A repeats step S11 and the subsequent steps.

As described above, in the display control ECU 30 as the vehicle display control device according to the first embodiment, the display control unit 36 causes the first display unit 24 mounted in the vehicle cabin 13 of the vehicle 10 to display any surrounding vehicle located around the vehicle 10 in different display modes depending on whether the driver assistance function is in the activated state or in the deactivated state. Since the surrounding vehicle is displayed in different display modes on the first display unit 24 depending on whether the driver assistance function is in the activated state or in the deactivated state, the occupant of the vehicle 10 can be easily aware of the activation state of the driver assistance function.

In the first embodiment, a surrounding vehicle is displayed two-dimensionally when the driver assistance function is in the deactivated state, and is displayed three-dimensionally when the driver assistance function is in the activated state. Manual driving can be an example of when the driver assistance function is in the deactivated state. In this case, surrounding vehicles are displayed two-dimensionally during manual driving, which can reduce excessive display during manual driving. This can reduce distraction of the driver.

In the first embodiment, for example, image data of a surrounding vehicle with a shape stored in advance is displayed based on the vehicle type information stored in the storage 30D. Since the image data showing the shape of the vehicle type of the surrounding vehicle that is actually located around the vehicle 10 is displayed, the driver can be more specifically aware of the surrounding vehicle.

### Second Embodiment

Next, a display control ECU 30-2 as a vehicle display control device according to a second embodiment of the present invention will be described. The same configurations as those in the first embodiment are denoted by the same signs as those in the first embodiment, and description thereof will be omitted. Only the configurations different from the first embodiment will be described.

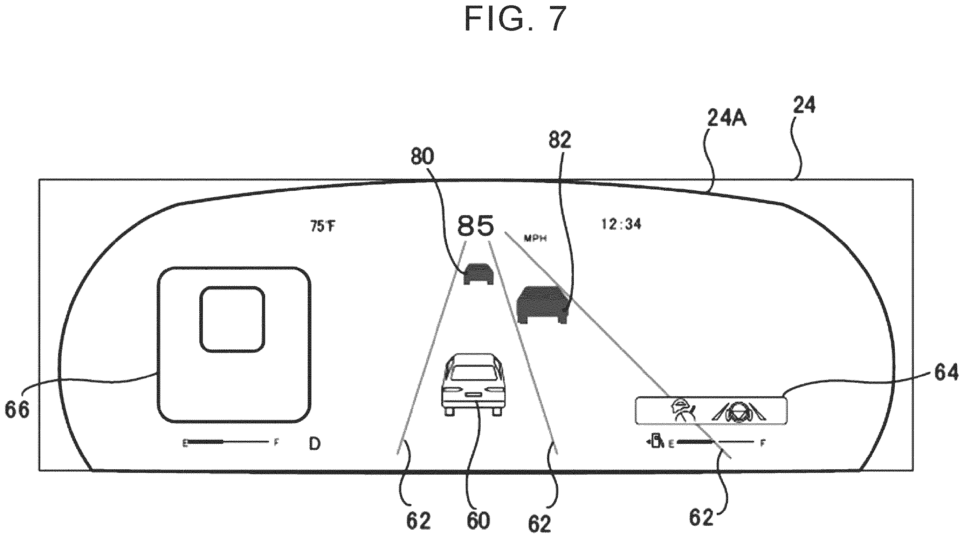

In the second embodiment, when the driver assistance function detection unit 34 detects that the autonomous driving mode and the ACC function are in the deactivated state, a display control unit 36-2 of the display control ECU 30-2 causes the first display unit 24 to display a surrounding vehicle as a three-dimensional image in the display area 24A. Specifically, as shown in FIG. 7, when there is a preceding vehicle traveling ahead of the vehicle 10 in the same lane as the vehicle 10, the display control unit 36-2 causes the first display unit 24 to display the preceding vehicle image 80 showing the preceding vehicle as a three-dimensional image. When there is an oncoming vehicle traveling in an oncoming lane, the display control unit 36-2 causes the first display unit 24 to display an oncoming vehicle image 82 showing the oncoming vehicle as a three-dimensional image. The oncoming vehicle image 82 is a three-dimensional image representing the outline of the oncoming vehicle.

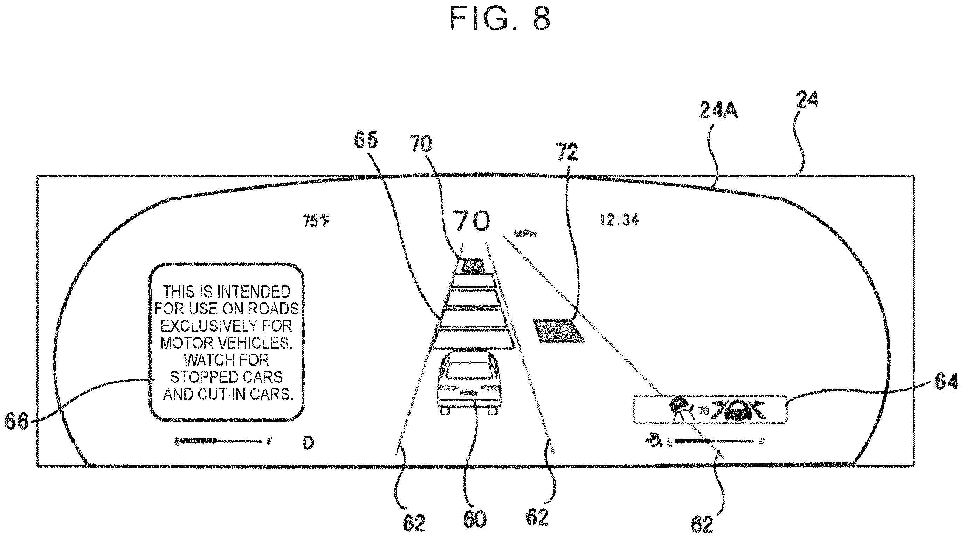

When the driver assistance function detection unit 34 detects that either or both of the autonomous driving mode and the ACC function are in the activated state, the display control unit 36-2 causes the first display unit 24 to display the surrounding vehicle as a two-dimensional image. Specifically, as shown in FIG. 8, when there is a preceding vehicle traveling ahead of the vehicle 10 in the same lane as the vehicle 10, the display control unit 36-2 causes the first display unit 24 to display the preceding vehicle image 70 showing the preceding vehicle as a two-dimensional image. When there is an oncoming vehicle traveling in an oncoming lane, the display control unit 36-2 causes the first display unit 24 to display the oncoming vehicle image 72 showing the oncoming vehicle as a two-dimensional image in the display area 24A. As an example, the display control unit 36-2 causes the first display unit 24 to display the preceding vehicle image 70 and the oncoming vehicle image 72 in a color different from that of a following distance image 65 in order to distinguish the preceding vehicle image 70 and the oncoming vehicle image 72 from the following distance image 65 displayed in the form of rectangular blocks.

### Functions

Next, functions and effects of the second embodiment will be described.

### Display Control Process

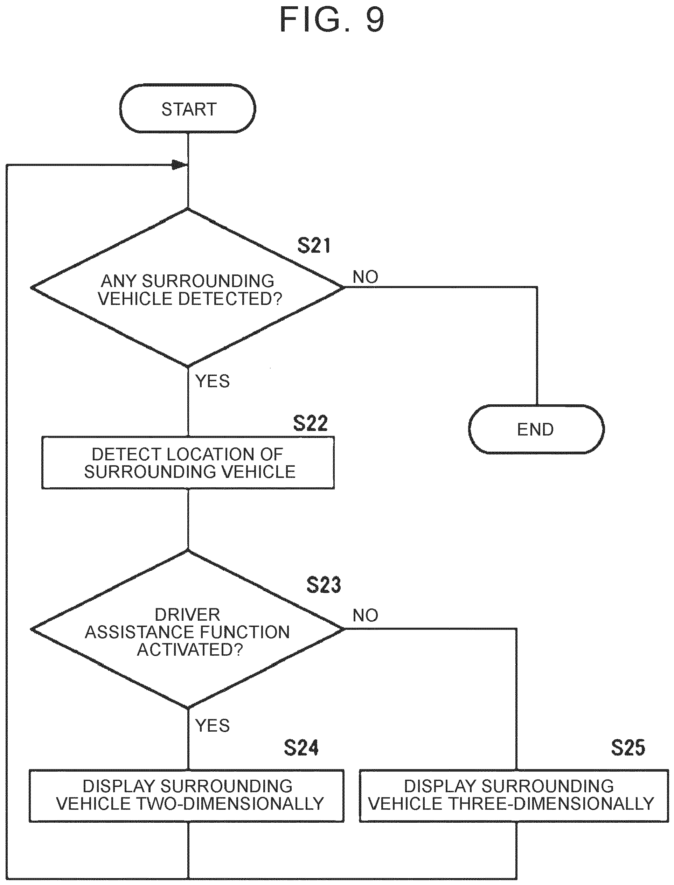

An example of the display control process of causing the first display unit 24 to display an image in the display area 24A will be described with reference to the flowchart of FIG. 9. Since steps S21 to S23 in FIG. 9 are the same as steps S11 to S13 of the first embodiment shown in FIG. 6, description thereof will be omitted.

As shown in FIG. 9, in step S23, the CPU 30A uses the function of the driver assistance function detection unit 34 to detect whether the driver assistance function of the vehicle 10 is the activated state or in the deactivated state. When the driver assistance function is the activated state, the determination result in step S23 is YES, and the process proceeds to step S24.

In step S24, the CPU 30A displays the surrounding vehicle as a two-dimensional image. Specifically, the CPU 30A uses the function of the display control unit 36-2 to cause the first display unit 24 to display the preceding vehicle image 70 and the oncoming vehicle image 72 as two-dimensional images as shown in FIG. 8 in such a manner as described above. As an example, each of the preceding vehicle image 70 and the oncoming vehicle image 72 is a two-dimensional image representing by a rectangle. The CPU 30A uses the function of the display control unit 36 to highlight an image(s) included in the state image 64 and representing an activated function(s) of the driver assistance function. The CPU 30A also uses the function of the display control unit 36 to cause the first display unit 24 to display a caution message, such as "This is intended for use on roads exclusively for motor vehicles. Watch for stopped cars and cut-in cars.," to the driver in an area where the driver image 66 is displayed.

On the other hand, when the driver assistance function is not activated in step S23, that is, when the driver assistance function is in the deactivated state, the determination result in step S23 is NO, and the process proceeds to step S25.

In step S25, the CPU 30A displays the surrounding vehicle as a three-dimensional image. Specifically, the CPU 30A uses the function of the display control unit 36-2 to cause the first display unit 24 to display the preceding vehicle image 80 and the oncoming vehicle image 82, each represented by a three-dimensional shape representing the contour of the vehicle, as shown in FIG. 7 in such a manner as described above.

The process then returns to step S21 while the CPU 30A continues to perform step S24 or step S25, and the CPU 30A repeats step S21 and the subsequent steps.

As described above, the display control ECU 30-2 as the vehicle display control device according to the second embodiment causes the first display unit 24 to display any surrounding vehicle three-dimensionally when the driver assistance function is in the deactivated state, and two-dimensionally when the driver assistance function is in the activated state. Manual driving can be an example of when the driver assistance function is in the deactivated state. In this case, surrounding vehicles are highlighted during manual driving by being displayed three-dimensionally. This can alert the driver about the surrounding vehicles.

### First Modification

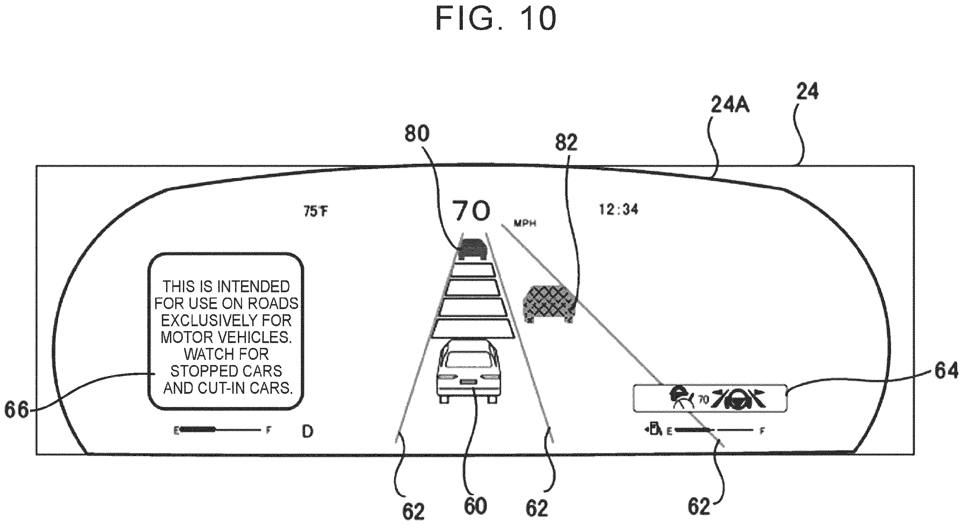

Next, a first modification will be described. FIG. 10 shows an example of display in the display area 24A of the first display unit 24 when the driver assistance function is in the activated state in the first modification. As shown in FIG. 10, in the first modification, the display control unit 36, 36-2 causes the first display unit 24 to display the preceding vehicle image 80 showing a preceding vehicle and the oncoming vehicle image 82 showing an oncoming vehicle in different display modes. Specifically, the display control unit 36, 36-2 causes the first display unit 24 to display the oncoming vehicle image 82 with a cross-hatching pattern on it so that the oncoming vehicle image 82 is more highlighted than the preceding vehicle image 80. This is not limited to the case where the preceding vehicle image and the oncoming vehicle image are three-dimensional images. Even when the preceding vehicle image and the oncoming vehicle image are two-dimensional images, the oncoming vehicle image 72 is displayed more highlighted than the preceding vehicle image 70.

As described above, since the preceding vehicle located in the same lane as the vehicle 10 and the oncoming vehicle are displayed in different display modes, the driver can easily distinguish between the preceding vehicle located in the same lane as the vehicle 10 and the oncoming vehicle. The vehicle located in the same lane as the vehicle 10 may be a vehicle located behind the vehicle 10. The highlighting method is not limited to the method described above, and a related art may be used.

### Second Modification

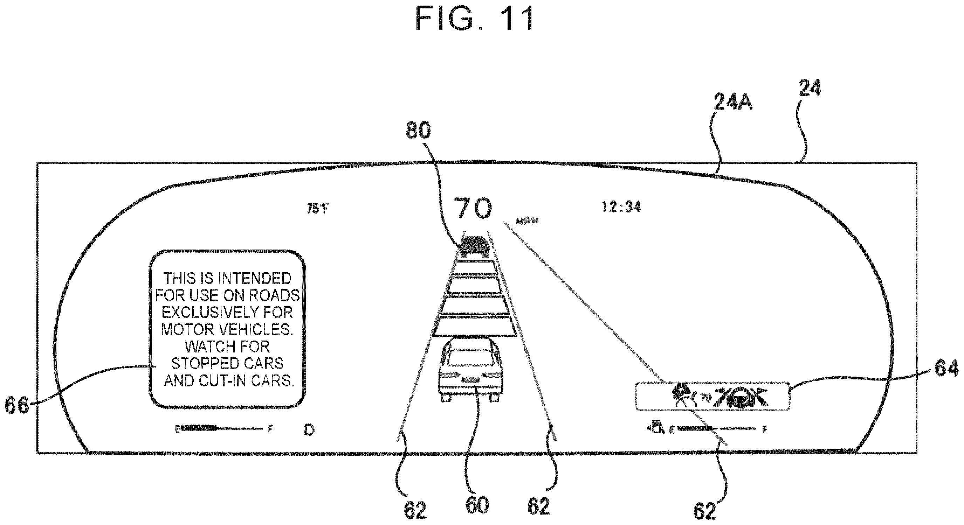

Next, a second modification will be described. FIG. 11 shows an example of display in the display area 24A of the first display unit 24 when the driver assistance function is in the activated state in the second modification. As shown in FIG. 11, in the second modification, the display control unit 36, 36-2 causes the first display unit 24 to display the preceding vehicle image 80 showing a preceding vehicle but not to display the oncoming vehicle image 82 showing an oncoming vehicle. That is, the display control unit 36, 36-2 does not cause the first display unit 24 to display the oncoming vehicle image 82. This is not limited to the case where the preceding vehicle image and the oncoming vehicle image are three-dimensional images. Even when the preceding vehicle image and the oncoming vehicle image are two-dimensional images, the oncoming vehicle image 72 is not displayed.

As described above, since the preceding vehicle located in the same lane as the vehicle 10 is displayed and the oncoming vehicle is not displayed, it becomes easier to be aware of the preceding vehicle located in the same lane as the vehicle 10.

### Third embodiment

Next, a display control ECU 30-3 as a vehicle display control device according to a third embodiment of the present invention will be described. The same configurations as those in the first embodiment are denoted by the same signs as those in the first embodiment, and description thereof will be omitted. Only the configurations different from the first embodiment will be described.

In the third embodiment, when a surrounding vehicle whose behavior value indicating behavior is higher than a predetermined threshold is detected, a display control unit 36-3 of the display control ECU 30-3 displays the surrounding vehicle in a highlighted state. The behavior value is, for example, a value calculated by the information acquisition unit 32 from, for example, information on a change in distance between the vehicle 10 and the surrounding vehicle located around the vehicle 10 and detected both by various sensors and from the captured image output from the camera of the information sensor group 27A.

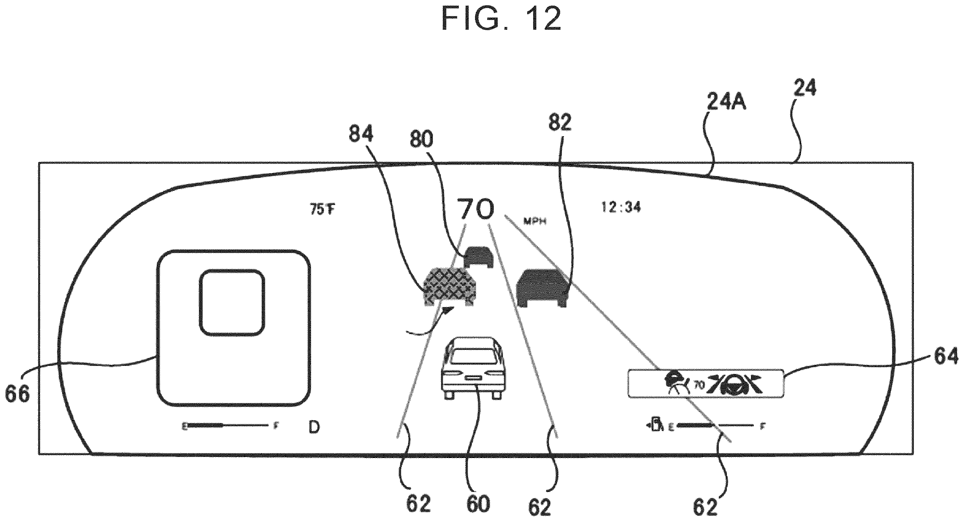

Specifically, for example, the threshold is set lower than the behavior value calculated when a vehicle cuts in between the vehicle 10 and the preceding vehicle from the left side of the vehicle 10 at such a timing that the vehicle 10 needs to brake as shown in FIG. 12. Alternatively, for example, the larger the number of times the preceding vehicle drifts across the lane line image 62 within a predetermined period of time, the larger the behavior value is calculated.

When a surrounding vehicle whose behavior value is higher than the predetermined threshold is detected, the display control unit 36-3 causes the first display unit 24 to display, for example, a cut-in vehicle image 84 showing a cut-in vehicle with a cross-hatching pattern on it so that the cut-in vehicle image 84 is more highlighted than the preceding vehicle image 80 and the oncoming vehicle image 82, as shown in FIG. 12. This is not limited to the case where the preceding vehicle image, the oncoming vehicle image, and the cut-in vehicle image are three-dimensional images. Even when the preceding vehicle image, the oncoming vehicle image, and the cut-in vehicle are two-dimensional images, the cut-in vehicle image is displayed more highlighted than the preceding vehicle image 70 and the oncoming vehicle image 72.

### Functions

Next, functions and effects of the third embodiment will be described.

### Display Control Process

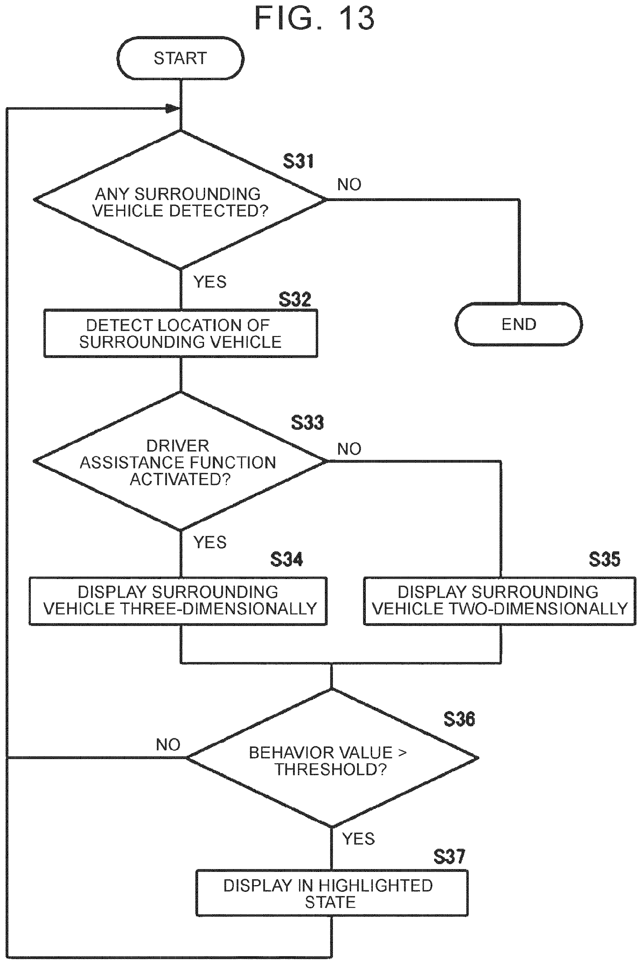

An example of the display control process of causing the first display unit 24 to display an image in the display area 24A will be described with reference to the flowchart of FIG. 13. Since steps S31 to S35 in FIG. 13 are the same as steps S11 to S15 of the first embodiment shown in FIG. 6, description thereof will be omitted.

As shown in FIG. 13, when a surrounding vehicle is displayed three-dimensionally or two-dimensionally in step S34 or step S35, the process proceeds to step S36.

The CPU 30A determines in step S36 whether the behavior value is larger than the predetermined threshold. When the behavior value is larger than the predetermined threshold, the determination result in step S36 is YES, and the process proceeds to step S37.

In step S37, the CPU 30A displays the surrounding vehicle whose behavior value is larger than the predetermined threshold in a highlighted state. Specifically, in the case where this vehicle is a cut-in vehicle, the CPU 30A uses the function of the display control unit 36-3 to cause the first display unit 24 to display the cut-in vehicle image 84 with a cross-hatching pattern on it so that the cut-in vehicle image 84 is more highlighted than the preceding vehicle image 80 and the oncoming vehicle image 82 as shown in FIG. 12.

The process then returns to step S31 while the CPU 30A continues to perform step S37, and the CPU 30A repeats step S31 and the subsequent steps. The calculation of the behavior value is performed when the location of the surrounding vehicle is detected in step S32.

On the other hand, when the behavior value is equal to or less than the predetermined threshold in step S36, the determination result in step S36 is NO. In this case, the process proceeds to step S31 while the CPU 30A continues to perform step S34 or step S35, and the CPU 30A repeats step S31 and the subsequent steps.

According to the third embodiment, the surrounding vehicle whose behavior value is larger than the predetermined threshold is displayed highlighted. This can alert the driver about the surrounding vehicle having a large behavior value. The highlighting method is not limited to the method described above, and a related art may be used.

### Supplementary Description

In the above embodiments, the display control units 36, 36-2, and 36-3 use three-dimensional display and two-dimensional display as an example of the method for changing the display mode of surrounding vehicles. However, the present invention is not limited to this. For example, an image of one surrounding vehicle may be displayed in a darker color than an image of another surrounding vehicle, or only an image of one surrounding vehicle may be displayed in a blinking fashion. A related art can be used as the method for changing the display mode.

Accordingly, for example, in the case where surrounding vehicles are displayed more highlighted when the driver assistance function is in the activated state than when the driver assistance function is in the deactivated state, and manual driving is an example of when the driver assistance function is in the deactivated state, the surrounding vehicles are not highlighted during manual driving, which can reduce excessive display during manual driving. This can reduce distraction of the driver. Manual driving can be an example of when the driver assistance function is in the deactivated state. In this case, when surrounding vehicles are displayed more highlighted during manual driving than when the driver assistance function is in the activated state, the surrounding vehicles are displayed highlighted during manual driving, which can alert the driver about the surrounding vehicles.

In the above embodiments, the driver assistance function detection unit 34 detects the activation states of the autonomous driving function and the ACC function as the state of the driver assistance function. However, the present invention is not limited to this. For example, the driver assistance function detection unit 34 may detect only the activation state of the autonomous driving function, or may detect only the activation state of the ACC function. The driver assistance function detection unit 34 may further detect the activation states of the automated parking function and the ADAS function etc. as the state of the driver assistance function, or may detect the activation state of one or more of these functions.

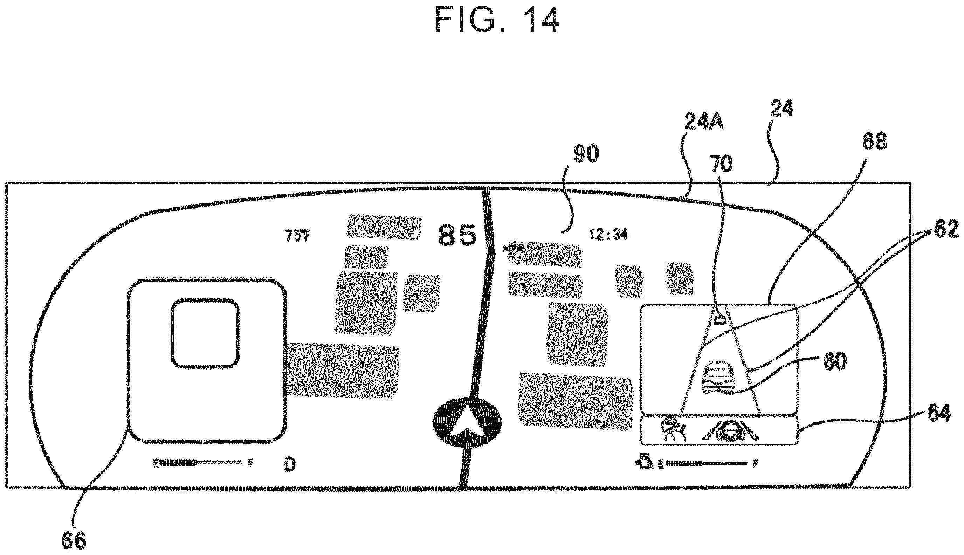

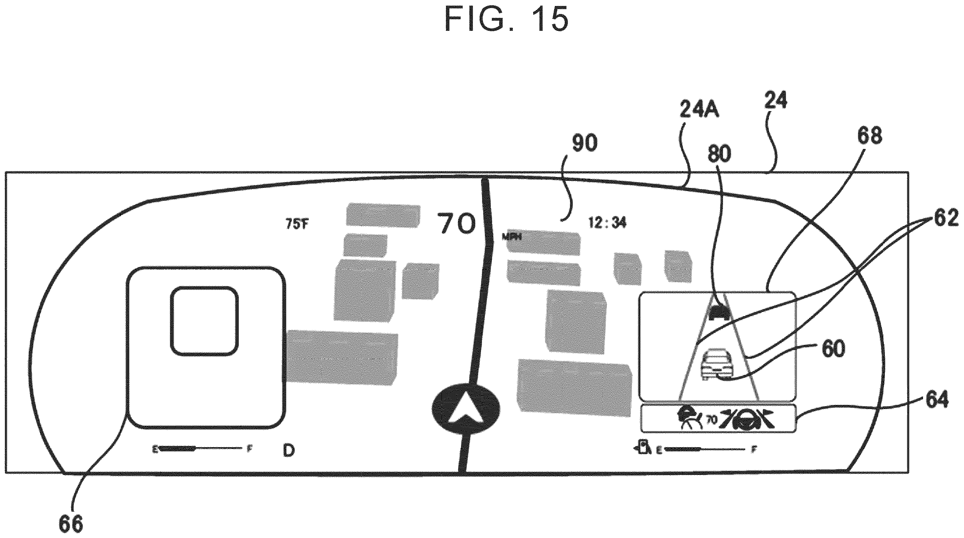

In the above embodiments, the display in the display area 24A of the first display unit 24 is described with reference to the examples shown in FIGS. 4, 5, 7, 8, and 10 to 12. However, the present invention is not limited to these. FIG. 14 shows an example of display in the display area 24A of the first display unit 24 when the driver assistance function is in the deactivated state according to a third modification. FIG. 15 shows an example of display in the display area 24A of the first display unit 24 when the driver assistance function is in the activated state according to the third modification.

As shown in FIGS. 14 and 15, for example, in the case where a three-dimensional map image 90 is displayed in the display area 24A of the first display unit 24, a captured surroundings image 68 showing the surroundings of the vehicle 10 may be displayed above the state image 64 in the lower right part of the display area 24A. The surroundings image 68 includes the vehicle image 60, the lane line images 62, and the preceding vehicle image 70 (80) shown in FIGS. 4, 5, 7, 8, and 10 to 12. The surroundings image 68 may include the oncoming vehicle image 72 (82).

For example, in the case where the driver assistance function detection unit 34 detects that the driver assistance function is in the deactivated state, the display control unit 36 causes the first display unit 24 to display the preceding vehicle image 70 as a two-dimensional image as shown in FIG. 14. For example, in the case where the driver assistance function detection unit 34 detects that the driver assistance function is in the activated state, the display control unit 36 causes the first display unit 24 to display the preceding vehicle image 80 as a three-dimensional image as shown in FIG. 15. The display control unit 36 also causes the first display unit 24 to highlight an image(s) included in the state image 64 and representing an activated function(s) of the driver assistance function.

As described above, even when the three-dimensional map image 90 is displayed in the display area 24A, that is, even when a navigation system (not shown) is in operation, a surrounding vehicle is displayed in different display modes on the first display unit 24 depending on whether the driver assistance function is in the activated state or in the deactivated state as shown in FIGS. 14 and 15. This makes it easier for the occupant to be aware of the activation state of the driver assistance function.

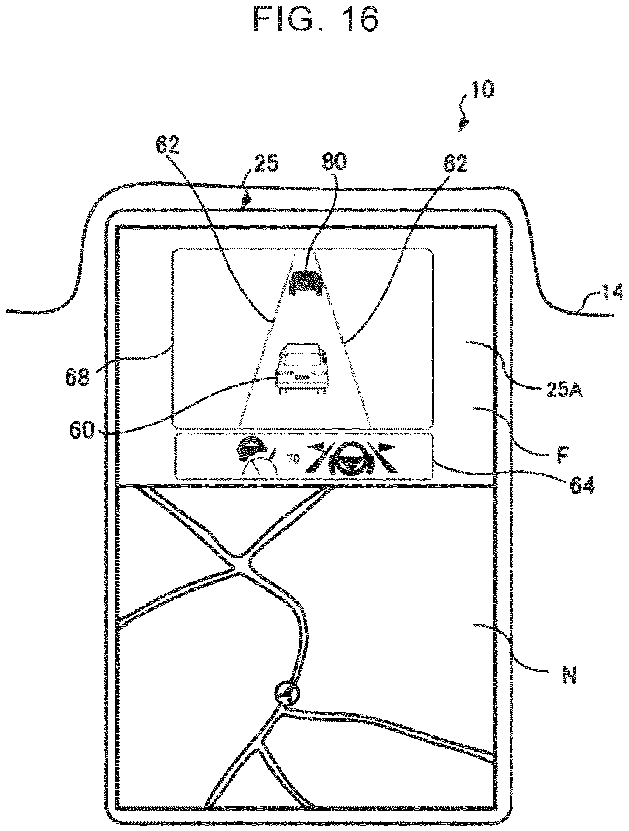

The above embodiments illustrates the case where a display area showing the view ahead of the vehicle 10 is displayed in the display area 24A of the first display unit 24. However, the present invention is not limited to this. For example, as in a modification shown in FIG. 16, a display area showing the view ahead of the vehicle 10 may be displayed in the display area 25A of the second display unit 25 that is a display mounted on the instrument panel 14.

As shown in FIG. 16, in this modification, the display area 25A of the second display unit 25 is vertically divided into two. In the second display unit 25 shown in FIG. 16, a map image N showing the current location of the vehicle 10 is displayed in the lower part of the display area, and the surroundings image 68 and the state image 64 are displayed in the upper part of the display area.

As described above, in this modification, the surroundings image 68 and the state image 64 are displayed on the second display unit 25 mounted on the instrument panel 14. As a result, an occupant who looks at the second display unit 25 can be easily aware of the activation state of the driver assistance function as in the above embodiments, regardless of the position where the occupant is seated.

Similarly, the surroundings image 68 and the state image 64 may be displayed on the display area 26A of the third display unit 26 that is a projection plane of the head-up display device 40. Since the display area 26A is a projection plane projected by the head-up display device 40 and located in front of the driver's seat, the surroundings image 68 and the state image 64 are displayed superimposed on the view ahead of the vehicle 10 from the driver's seat. This allows the occupant in the driver's seat to be aware of the activation state of the driver assistance function without significantly moving his or her gaze.

The above embodiments illustrate the case where there are one preceding vehicle and one oncoming vehicle. However, the present invention is not limited to this. When either or both of the number of detected preceding vehicles and the number of detected oncoming vehicles are two or more, the display control unit 36 may cause, for example, a vehicle located closer to the vehicle 10 to be displayed in a highlighted state.

Various processors other than the CPU 30 shown in FIG. 2 may perform the processes that are performed by the CPU 30 by reading the software (programs) in the above embodiment. In this case, examples of the processors include: a programmable logic device (PLD) whose circuit configuration can be changed after manufacturing, such as a field-programmable gate array (FPGA); and a dedicated electrical circuit that is a processor having a circuit configuration designed exclusively to perform a specific process, such as an application-specific integrated circuit (ASIC). The processes may be performed by one of the various processors, or may be performed by a combination of two or more processors of the same type or different types (e.g., a plurality of FPGAs or a combination of a CPU and an FPGA). The hardware configurations of the various processors are, more specifically, electrical circuitry composed of a combination of circuit elements such as semiconductor elements.

Each program described in the above embodiments may be provided in the form stored in a storage medium such as a compact disc read-only memory (CD-ROM), a digital versatile disc read-only memory (DVD-ROM), or a universal serial bus (USB) memory. Alternatively, each program may be downloaded from an external device via a network.

Although the embodiments of the present invention are described above, it should be understood that the present invention is not limited to these and the present invention can be modified in various forms without departing from the spirit and scope of the present invention.

## Claims

1. A vehicle display control device (30) comprising one or more processors configured to
acquire information on any surrounding vehicle located around a vehicle (10),
detect a state of a driver assistance function installed in the vehicle (10), and
cause a display (24, 25, 26) installed in a vehicle cabin (13) of the vehicle (10) to display the surrounding vehicle in different display modes depending on whether the driver assistance function is in an activated state or in a deactivated state.

2. The vehicle display control device (30) according to claim 1, wherein the one or more processors are configured to cause the display (24, 25, 26) to display the surrounding vehicle more highlighted when the driver assistance function is in the activated state than when the driver assistance function is in the deactivated state.

3. The vehicle display control device (30) according to claim 1, wherein the one or more processors are configured to cause the display (24, 25, 26) to display the surrounding vehicle more highlighted when the driver assistance function is in the deactivated state than when the driver assistance function is in the activated state.

4. The vehicle display control device (30) according to claim 1, wherein the one or plurality processors are configured to
cause the display (24, 25, 26) to display the surrounding vehicle two-dimensionally when the driver assistance function is in the deactivated state, and
cause the display (24, 25, 26) to display the surrounding vehicle three-dimensionally when the driver assistance function is in the activated state.

5. The vehicle display control device (30) according to claim 1, wherein the one or plurality processors are configured to
cause the display (24, 25, 26) to display the surrounding vehicle three-dimensionally when the driver assistance function is in the deactivated state, and
cause the display (24, 25, 26) to display the surrounding vehicle two-dimensionally when the driver assistance function is in the activated state.

6. The vehicle display control device (30) according to claim 1, wherein:
the information on the surrounding vehicle includes vehicle type information; and
the one or more processors are configured to cause the display (24, 25, 26) to display image data of the surrounding vehicle having a shape stored in advance, based on the vehicle type information.

7. The vehicle display control device (30) according to claim 1, wherein the one or more processors are configured to, when the surrounding vehicle whose behavior value indicating behavior is larger than a predetermined threshold is detected, cause the display (24, 25, 26) to display the surrounding vehicle highlighted.

8. The vehicle display control device (30) according to claim 1, wherein the one or more processors are configured to cause the display (24, 25, 26) to display either or both of a preceding vehicle and a following vehicle that are located in a same lane as the vehicle and an oncoming vehicle located in an oncoming lane in different display modes from each other.

9. The vehicle display control device (30) according to claim 1, wherein the one or more processors are configured to cause the display (24, 25, 26) to display either or both of a preceding vehicle and a following vehicle that are located in a same lane as the vehicle and not to display an oncoming vehicle located in an oncoming lane.

10. A vehicle display control method comprising:
acquiring information on any surrounding vehicle located around a vehicle (10);
detecting a state of a driver assistance function installed in the vehicle (10); and
causing a display (24, 25, 26) installed in a vehicle cabin (13) of the vehicle (10) to display the surrounding vehicle in different display modes depending on whether the driver assistance function is in an activated state or in a deactivated state.

11. A non-transitory storage medium storing instructions that are executable by one or more processors and that cause the one or more processors to perform functions comprising:
acquiring information on any surrounding vehicle located around a vehicle (10);
detecting a state of a driver assistance function installed in the vehicle (10); and
causing a display (24, 25, 26) installed in a vehicle cabin (13) of the vehicle (10) to display the surrounding vehicle in different display modes depending on whether the driver assistance function is in an activated state or in a deactivated state.
